# EUROPEAN PATENT APPLICATION

(11) **EP 4 265 110 A1**
(43) Date of publication of application: **25.10.2023**
(21) Application number: 22169127.2
(22) Date of filing: 20.04.2022
(51) Int. Cl.: A01N 25/14, A01N 43/12

(54) **WATER DISPERSIBLE GRANULES WITH LOW MELTING ACTIVE INGREDIENTS PREPARED BY EXTRUSION**

(71) Applicant: Bayer AG, 51373 Leverkusen (DE)
(72) Inventor: The designation of the inventor has not yet been filed
(74) Representative: BIP Patents

(57) **Abstract**

The instant invention refers to a solid granular formulation of at least one active ingredient with a low melting point, e.g. Flupyradifurone, as active ingredient in the form of water dispersible granules (WG) or similar types and a process to produce these granules of the low melting active ingredient with sufficiently high concentration which additionally show good physical and chemical storage stability.

## Description

The instant invention refers to a solid granular formulation of at least one active ingredient with a low melting point, e.g. Flupyradifurone, as active ingredient in the form of water dispersible granules (WG) or similar types and a process to produce these granules of the low melting active ingredient with sufficiently high concentration which additionally show good physical and chemical storage stability.

Flupyradifurone is a new active ingredient with a strong efficacy against, among others, sucking insects.

To exploit the full potential of this insecticide and to prevent an early resistance building it is however both desired and necessary to employ develop mixtures with other active ingredients (preferably insecticides).

Due to the physical chemical properties of Flupyradifurone, especially its high solubility in water (approx. 3 g/L @ ambient conditions, which refers to, if not otherwise indicated in this application, to normal pressure and 25°C (ambient temperature)) and its low melting point (69 °C), preferred formulation types for these mixtures such as suspension concentrates (SC) or suspoemulsions (SE) are not possible to obtain.

As the relevant mixing partners often show only a very low solubility in the solvents that dissolve Flupyradifurone well, also emulsion concentrates (EC) and soluble liquids (SL) are not suitable and cannot be considered for such mixed formulations which provide agronomically relevant and required concentrations of the active ingredients.

The only formulation type that fits to the required mixtures would be a water dispersible granule (WG) in which both active ingredients are present in a solid state and the use of solvents can be prevented.

Water dispersible granules can be produced by different technologies, such as e.g. spray drying, fluid bed granulation or extrusion. The first two require high temperatures and are therefore not suitable for WGs containing Flupyradifurone. Extrusion can in principle be used at low temperatures so that the processing takes place at a temperature below the melting point of the active ingredient. However, during the development of such extruder WGs it became clear that even at temperatures more than 10 K below the melting point of Flupyradifurone the processing of the WG was problematic because of the stickiness of the produced granules. Numerous experiments resulted in strong aggregation of the extruded material and therewith material that could not be diluted or dispersed into a spray solution. Neither did these numerous experiments result in formulations or products that were storage stable for the required periods of time (at least 8 weeks at 40 °C or at least 2 years at ambient temperature).

Hence, the task of the instant invention was to provide a solid granular formulation of an active ingredient with low melting point (water dispersible granules WG or similar types) and a process to produce these granules of the low melting active ingredient with sufficiently high concentration which additionally has good physical and chemical storage stability.

Surprisingly it was found that the addition of a water-soluble filler improved the properties of the formulation significantly, firstly regarding its processability of the granules and secondly regarding physical storage stability.

The preferred process to prepare the granules was found to be low pressure extrusion or similar techniques to avoid higher temperatures like in any spray process.

Usually low melting AIs (active ingredients) are not recognized as being suitable for granulation processes since any physical stress will lead to heat and thus melting of the active ingredient leading to non-soluble or non-dispersible granules with lack of storage stability.

Moreover, storage at elevated temperature will lead to irreversible deterioration of the product, e.g. due to phase separation or recrystallisation of active over time.

WO 2019/19763 1describes extruded WGs of Spidoxamat, a high melting active, with good biological efficacy due to improved solubility of Spidoxamat by addition of a salt (diammonium hydrogen phosphate).

The invention therefore relates to insecticidal solid compositions in the form of water-dispersible granules (solid formulations) comprising:
a) at least one low-melting active ingredient,
b) optional other active ingredients,
c) at least one dispersant,
d) at least one water-soluble filler,
e) optionally a water-insoluble filler,
f) at least one structure former
g) optional other common adjuvants and formulation aids.

In a preferred embodiment the WG according to the invention is free of DAHP (diammonium hydrogen phosphate).

In one preferred embodiment component e) is mandatory.

### (a) low-melting active ingredient

Under a low-melted active ingredient is understood in the context of the present invention an active ingredient with a melting point between 30-90 °C, preferably between 50-75 °C.

More preferred a) is selected from the group of Acrinathrin, Acephat, Alachlor, Aminomethyl phosphonic acid, Ametryn, Amitraz, Azamethiphos, Barbamate, Baycarb, Baygon, Beflubutamid, Benalaxyl, Benfluralin, Benfuresate, Bensulide, Bensultap, Benzoximate, Bifenox, Bifenthrin, Binapacryl, Bioresmethrin, Bromophos-methyl, Bromopropylate, Bromoxynil-heptanoate, Bromoxynil octanoate, Bromuconazol, Butocarboxim sulfoxide, Butoxycarboxim, Butralin, Chlorbenside, Chlorbufam, Chlordimeform, Chlorobenzilate, Chloropropylate, Chlorpropham, Chlorpyrifos-methyl, Chlorpyrifos-oxon, Clethodim, Cloquintocet-mexyl, Crimidine, Crufomate, Cyanofenphos, Cycloxydime, Cyflufenamide, Cyfluthrin, Cyhalofop-butyl, Lambda-Cyhalothrin, Alpha-Cypermethrin, Danitol, Desmetryn, Dialifos, Difenoconazole, Dimepax, Dimethachlor, Dimetilan, Dinoseb, Dithiopyr, Etaconazole, Ethalfluralin, Ethephon, Ethofumesate, Ethyl carbamate, Fenamiphos, Fenoxanil, Fenoxycarb, Fluchloralin, Flufenacet ,Flupyradifurone, Furathiocarb, Furalaxyl, Glyodin, Imazalil, Hymexazol, Imidan, Imibenconazole, Indoxacrab, Iodofenphos, Ipconazole, Isocarbophos, Leptophos, Mefenpyr-diethyl, Metazachlor, Metalaxyl, Methoxychlor, Methomyl, Metolcarb, Mexacarbate, Monolinuron, Myclobutanil, Napropamide, Nitrapyrin, Nitrofen, Oxabetrinil, Oxadiazon, Oxyfluorfen, Penconazole, Pendimethalin, Pentanochlor, Permethrin, Pethoxamid, Phosalone, Picoxystrobin, Propachlor, Propamocarb, Propetamphos, Propham, Proquinazid, Proximpham, Pyraclofos, Pyraclostrobin, Pyrazophos, Pyrimidifen, Spinosad, Spirodiclofen, Tefluthrin, Tebufenpyrad, Terbufos sulfone, Tetrachlorvinphos, Tetramethrin, Thiazopyr, Thiofanox, Thiofanox sulfoxide, Tolclofos-methyl, Toxaphene, Transfluthrin, Triadimefon, Trichlorfon, Triflumizole, Trifluralin, Trinexapac-ethyl, Vamidothion.

In a further preferred embodiment a) is selected from the group consisting of, Cyfluthrin, beta-Cyfluthrin,Acetamiprid, Spinosad and Flupyradifurone.

Especially preferred as compound a) are Flupyradifurone and Beta-cyfluthrin.

### (b) other active ingredients

The formulation may contain one or more other agrochemical active ingredients b) different from a), preferably selected from the group of insecticides, herbicides, fungicides and host defense inducers.

Agronomically used insecticides, acaricides and/or nematicides as meant in this invention, here mentioned with their "common name", are known and described e.g. in "The Pesticide Manual" 16th Ed., British Crop Protection Council 2012, or can be found in internet (e.g. http://www.alanwood.net/pesticides). Their classification is based on the IRAC Mode of Action Classification Scheme as known at filing date.

More preferably, one or more active ingredients are selected from the group of insecticides.

Active ingredients b) being insecticides are preferably selected from :
(1) Acetylcholinesterase(AChE)-inhibitors, e.g. Carbamates Alanycarb, Bendiocarb, Benfuracarb, Butocarboxim, , Carbaryl, Carbofuran, Carbosulfan, Ethiofencarb, Fenobucarb, Formetanate, , Isoprocarb, Methiocarb, Oxamyl, Pirimicarb, Propoxur, Thiodicarb, Triazamate, Trimethacarb, XMC andan Xylylcarb, or organophosphates , e.g., Azinphos-ethyl, Azinphos-methyl, Cadusafos, Chlorethoxyfos, Chlorfenvinphos, Chlormephos, , Coumaphos, Cyanophos, Demeton-S-methyl, Diazinon, Dichlorvos/DDVP, Dicrotophos, Dimethoat, Dimethylvinphos, Disulfoton, EPN, Ethion, Ethoprophos, Famphur, , Fenitrothion, Fenthion, Fosthiazat, Heptenophos, Imicyafos, Isofenphos, Isopropyl-O-(methoxyaminothio-phosphoryl)salicylat, Isoxathion, Malathion, Mecarbam, Methamidophos, Methidathion, Mevinphos, Monocrotophos, Naled, Omethoate, Oxydemeton-methyl, Parathion-methyl, Phenthoat, Phorat, Phosalon, Phosmet, Phosphamidon, Phoxim, Pirimiphos-methyl, Profenofos, Prothiofos, Pyridaphenthion, Quinalphos, Sulfotep, Tebupirimfos, Temephos, Thiometon, Triazophos, and Triclorfon.
(2) GABA-gated chloride channel antagonists , preferably Cyclodien-organochlorine selected from the group of Chlordan and Endosulfan, or Phenylpyrazole (Fiprole) selected from Ethiprol and Fipronil.
(3) Sodium channel modulators / voltage-dependent sodium channel blockers, for example pyrethroids, e.g., Allethrin, d-cis-trans Allethrin, d-trans Allethrin, Bioallethrin, Bioallethrin S-cyclopentenyl isomer, , Cycloprothrin, Cyphenothrin [(1R)-trans isomers], Deltamethrin, Empenthrin [(EZ)-(1R) isomers), Esfenvalerate, Etofenprox, Fenpropathrin, Fenvalerate, Flucythrinate, Flumethrin, tau-Fluvalinate, Halfenprox, Imiprothrin, Kadethrin, Momfluorothrin, Phenothrin [(1R)-trans isomer), Prallethrin, Pyrethrine (pyrethrum), Silafluofen, Tralomethrin and DDT.
(4) Nicotinic acetylcholine receptor (nAChR) competitive activators, preferably Neonicotinoids selected from, Clothianidin, Dinotefuran, Imidacloprid, Nitenpyram, Thiacloprid and Thiamethoxam, or Nicotin, or Sulfoximine selected from Sulfoxaflor, or Butenolide selected from Mesoionics or selected from Triflumezopyrim.
(5) Nicotinic acetylcholine receptor (nAChR) allosteric activators, preferably Spinosynes selected from Spinetoram.
(6) Allosteric modulators of the glutamate-dependent chloride channel (GluCl), preferably Avermectine/Milbemycine selected from Abamectin, Emamectin-benzoate, Lepimectin and Milbemectin.
(7) Juvenile hormone mimetics, preferably Juvenile hormon-analogs selected from Hydropren, Kinopren and Methopren, or Pyriproxyfen.
(8) Various non-specific (multi-site) inhibitors, preferably Alkylhalogenides selected from Methylbromide and other Alkylhalogenides, or Chloropicrin or Sulfurylfluorid or Borax or Tartar emetic or Methylisocyanate generators selected from Diazomet and Metam.
(9) TRPV channel modulators of chordotonal organs selected from Pymetrozin and Pyrifluquinazon.
(10) Mite growth inhibitors selected from Clofentezin, Hexythiazox, Diflovidazin and Etoxazol.
(11) Microbial disruptors of the insect intestinal membrane selected from Bacillus thuringiensis Subspezies israelensis, Bacillus sphaericus, Bacillus thuringiensis Subspezies aizawai, Bacillus thuringiensis Subspezies kurstaki, Bacillus thuringiensis subspecies tenebrionis and B.t.-plant proteins selected from Cry1Ab, Cry1Ac, Cry1Fa, Cry1A.105, Cry2Ab, VIP3A, mCry3A, Cry3Ab, Cry3Bb and Cry34Ab1/35Ab1.
(12) Mitochondrial ATP synthase inhibitors, preferably ATP-disruptors selected from Diafenthiuron, or Organo-tin-compoiunds selected from Azocyclotin, Cyhexatin and Fenbutatin-oxid, or Propargit or Tetradifon.
(13) Decoupler of oxidative phosphorylation by disturbance of the proton gradient selected from Chlorfenapyr, DNOC and Sulfluramid.
(14) Nicotinic acetylcholine receptor channel blocker selected from, Cartap-hydrochlorid, Thiocyclam and Thiosultap-Sodium.
(15) Inhibitors of chitin biosynthesis, Typ 0, selected from Bistrifluron, Chlorfluazuron, Diflubenzuron, Flucycloxuron, Flufenoxuron, Hexaflumuron, Lufenuron, Novaluron, Noviflumuron, Teflubenzuron and Triflumuron.
(16) Inhibitors of chitin biosynthesis, Typ 1 selected from Buprofezin.
(17) Molting disruptor (especially for dipteras, i.e. two-winged insects) selected from Cyromazin.
(18) Ecdyson receptor agonists selected from Chromafenozid, Halofenozid, Methoxyfenozid and Tebufenozid.
(19) Octopamin-receptor-agonists.
(20) Mitochondrial complex III electron transport inhibitors selected from Hydramethylnon, Acequinocyl and Fluacrypyrim.
(21) Mitochondrial complex I electron transport inhibitors, preferably so-called METI-acaricides selected from Fenazaquin, Fenpyroximat, Pyridaben, and Tolfenpyrad, or Rotenon (Derris).
(22) Blocker of the voltage-dependent sodium channel selected from Indoxacarb and Metaflumizone.
(23) Inhibitors of acetyl-CoA carboxylase, preferably tetronic and tetramic acid derivatives selected from, Spiromesifen, Spirotetramat and Spidoxamate (IUPAC Name: 11-(4-chloro-2,6-xylyl)-12-hydroxy-1,4-dioxa-9-azadispiro[4.2.4.2]tetradec-11-en-10-one).
(24) Mitochondrial complex IV electron transport inhibitors, preferably Phosphines selected from Aluminiumphosphid, Calciumphosphid, Phosphin and Zinkphosphid, or Cyanides selected from Calciumcyanid, Potassiumcyanid and Sodiumcyanid.
(25) Mitochondrial complex II electron transport inhibitors, preferablybeta-Ketonitrilderivate selected from Cyenopyrafen and Cyflumetofen, or Carboxanilide selected from Pyflubumid.
(28) Ryanodinreceptor-modulators, preferably Diamide selected from Chlorantraniliprol, Cyantraniliprol and Flubendiamid.
(29) Modulators of chordotonal organs (with undefined target structure) selected from Flonicamid.
(30) other active ingredients selected from Acynonapyr, Afidopyropen, Afoxolaner, Azadirachtin, Benclothiaz, Benzoximat, Benzpyrimoxan, Bifenazat, Broflanilid, Bromopropylat, Chinomethionat, Chloroprallethrin, Cryolit, Cyclaniliprol, Cycloxaprid, Cyhalodiamid, Dicloromezotiaz, Dicofol, Dimpropyridaz, epsilon-Metofluthrin, epsilon-Momfluthrin, Flometoquin, Fluazaindolizin, Fluensulfon, Flufenerim, Flufenoxystrobin, Flufiprol, Fluhexafon, Fluopyram, Flupyrimin, Fluralaner, Fluxametamid, Fufenozid, Guadipyr, Heptafluthrin, Imidaclothiz, Iprodione, Isocycloseram, , Lotilaner, Meperfluthrin, Oxazosulfyl, Paichongding, Pyridalyl, Pyrifluquinazon, Pyriminostrobin, Spirobudiclofen, Spiropidion, Tetramethylfluthrin, Tetraniliprol, Tetrachlorantraniliprol, Tigolaner, Tioxazafen, Thiofluoximat and Iodmethan; products from Bacillus firmus (1-1582, BioNeem, Votivo), as well as following compounds: 1-{2-Fluor-4-methyl-5-[(2,2,2-trifluorethyl)sulfinyl]phenyl}-3-(trifluormethyl)-1H-1,2,4-triazol-5-amin (known from WO2006/043635) (CAS 885026-50-6), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (known from WO2003/106457) (CAS 637360-23-7), 2-Chlor-N-[2-{1-[(2E)-3-(4-chlorphenyl)prop-2-en-1-yl]piperidin-4-yl}-4-(trifluormethyl)phenyl]isonicotinamid (known from WO2006/003494) (CAS 872999-66-1), 3-(4-Chlor-2,6-dimethylphenyl)-4-hydroxy-8-methoxy-1,8-diazaspiro[4.5]dec-3-en-2-on (known from WO 2010052161) (CAS 1225292-17-0), 3-(4-Chlor-2, 6-dimethylphenyl)-8-methoxy-2-oxo-1,8-diazaspiro[4.5]dec-3-en-4-yl-ethylcarbonat (known from EP 2647626) (CAS-1440516-42-6), 4-(But-2-in-1-yloxy)-6-(3,5-dimethylpiperidin-1-yl)-5-fluorpyrimidin (known from WO2004/099160) (CAS 792914-58-0), PF1364 (known from JP2010/018586) (CAS-Reg.No. 1204776-60-2), (3E)-3-[1-[(6-Chlor-3-pyridyl)methyl]-2-pyridyliden]-1,1,1-trifluorpropan-2-on (known from WO2013/144213) (CAS 1461743-15-6), N-[3-(Benzylcarbamoyl)-4-chlorphenyl]-1-methy1-3-(pentafluorethyl)-4-(trifluormethyl)-1H-pyrazol-5 -carboxamid (known from WO2010/051926) (CAS 1226889-14-0), 5-Brom-4-chlor-N-[4-chlor-2-methyl-6-(methylcarbamoyl)phenyl]-2-(3-chlor-2-pyridyl)pyrazol-3-carboxamid (known from CN103232431) (CAS 1449220-44-3), 4-[5-(3,5-Dichlorphenyl)-4,5-dihydro-5-(trifluormethyl)-3-isoxazolyl]-2-methyl-N-(cis-1-oxido-3-thietanyl)benzamid, 4-[5-(3,5-Dichlorphenyl)-4,5-dihydro-5-(trifluormethyl)-3-isoxazolyl]-2-methyl-N-(trans-1-oxido-3-thietanyl)benzamid and 4-[(5S)-5-(3,5-Dichlorphenyl)-4,5-dihydro-5-(trifluormethyl)-3-isoxazolyl]-2-methyl-N-(cis-1-oxido-3-thietanyl)benzamid (known from WO 2013/050317 A1) (CAS 1332628-83-7), N-[3-Chlor-1-(3-pyridinyl)-1H-pyrazol-4-yl]-N-ethyl-3-[(3,3,3-trifluorpropyl)sulfinyl]propanamid, (+)-N-[3-Chlor-1-(3-pyridinyl)-1H-pyrazol-4-yl]-N-ethyl-3-[(3,3,3-trifluorpropyl)sulfinyl]propanamid and (-)-N-[3-Chlor-1-(3-pyridinyl)-1H-pyrazol-4-yl]-N-ethyl-3-[(3,3,3-trifluorpropyl)sulfinyl]propanamid (known from WO 2013/162715 A2, WO 2013/162716 A2, US 2014/0213448 A1) (CAS 1477923-37-7), 5-[[(2E)-3-Chlor-2-propen-1-yl]amino]-1-[2,6-dichlor-4-(trifluormethyl)phenyl]-4-[(trifluormethyl)sulfinyl]-1H-pyrazol-3-carbonitrile (known from CN 101337937 A) (CAS 1105672-77-2), 3-Brom-N-[4-chlor-2-methyl-6-[(methylamino)thioxomethyl]phenyl]-1-(3-chlor-2-pyridinyl)-1H-pyrazol-5-carboxamid, (Liudaibenjiaxuanan, known from CN 103109816 A) (CAS 1232543-85-9); N-[4-Chlor-2-[[(1,1-dimethylethyl)amino]carbonyl]-6-methylphenyl]-1-(3-chlor-2-pyridinyl)-3-(fluormethoxy)-1H-pyrazol-5-carboxamid (known from WO 2012/034403 A1) (CAS 1268277-22-0), N-[2-(5-Amino-1,3,4-thiadiazol-2-yl)-4-chlor-6-methylphenyl]-3-brom-1-(3-chlor-2-pyridinyl)-1H-pyrazol-5-carboxamid (known from WO 2011/085575 A1) (CAS 1233882-22-8), 4-[3-[2,6-Dichlor-4-[(3,3-dichlor-2-propen-1-yl)oxy]phenoxy]propoxy]-2-methoxy-6-(trifluormethyl)pyrimidin (known from CN 101337940 A) (CAS 1108184-52-6); (2E)- and 2(Z)-2-[2-(4-Cyanophenyl)-1-[3-(trifluormethyl)phenyl]ethyliden]-N-[4-(difluormethoxy)phenyl]hydrazincarboxamid (known from CN 101715774 A) (CAS 1232543-85-9); Cyclopropancarbonsaure-3-(2,2-dichlorethenyl)-2,2-dimethyl-4-(1H-benzimidazol-2-yl)phenylester (known from CN 103524422 A) (CAS 1542271-46-4); (4aS)-7-Chlor-2,5-dihydro-2-[[(methoxycarbonyl) [4- [(trifluormethyl)thio]phenyl]amino] carbonyl]indeno [1,2-e][1,3,4]oxadiazin-4a(3H)-carbonsauremethylester (known from CN 102391261 A) (CAS 1370358-69-2); 6-Desoxy-3-O-ethyl-2,4-di-O-methyl-1-[N-[4-[1-[4-(1,1,2,2,2-pentafluorethoxy)phenyl]-1H-1,2,4-triazol-3-yl]phenyl]carbamat]-α-L-mannopyranose (known from US 2014/0275503 A1) (CAS 1181213-14-8); 8-(2-Cyclopropylmethoxy-4-trifluormethylphenoxy)-3-(6-trifluormethylpyridazin-3-yl)-3-azabicyclo[3.2.1]octan (CAS 1253850-56-4), (8-anti)-8-(2-Cyclopropylmethoxy-4-trifluormethylphenoxy)-3-(6-trifluormethylpyridazin-3-yl)-3-azabicyclo[3.2.1]octan (CAS 933798-27-7), (8-syn)-8-(2-Cyclopropylmethoxy-4-trifluormethylphenoxy)-3-(6-trifluormethylpyridazin-3-yl)-3-azabicyclo[3.2.1]octan (known from WO 2007040280 A1, WO 2007040282 A1) (CAS 934001-66-8), N-[3-Chlor-1-(3-pyridinyl)-1H-pyrazol-4-yl]-N-ethyl-3-[(3,3,3-trifluorpropyl)thio]-propanamid (known from WO 2015/058021 A1, WO 2015/058028 A1) (CAS 1477919-27-9) and N-[4-(Aminothioxomethyl)-2-methyl-6-[(methylamino)carbonyl]phenyl]-3-bromo-1-(3-chloro-2-pyridinyl)-1H-pyrazol-5-carboxamid (known from CN 103265527 A) (CAS 1452877-50-7), 5-(1,3-Dioxan-2-yl)-4-[[4-(trifluormethyl)phenyl]methoxy]-pyrimidin (known from WO 2013/115391 A1) (CAS 1449021-97-9), 3-(4-Chlor-2,6-dimethylphenyl)-8-methoxy-1-methyl-1,8-diazaspiro[4.5]decane-2,4-dion (known from WO 2014/187846 A1) (CAS 1638765-58-8), 3-(4-Chlor-2,6-dimethylphenyl)-8-methoxy-1-methyl-2-oxo-1,8-diazaspiro[4.5]dec-3-en-4-yl-carbonsaureethylester (known from WO 2010/066780 A1, WO 2011151146 A1) (CAS 1229023-00-0), 4-[(5S)-5-(3,5-Dichlor-4-fluorophenyl)-4,5-dihydro-5-(trifluoromethyl)-3-isoxazolyl]-N-[(4R)-2-ethyl-3-oxo-4-isoxazolidinyl]-2-methyl-benzamid (known from WO 2011/067272, WO2013/050302) (CAS 1309959-62-3).

Even more preferred are agrochemical active ingredients with a low water solubility. Low water solubility in the context of the instant invention means a solubility at room temperature of less than 1 mg/l @ 20°C (pH 7)

Particularly preferred is spiromesifen.

### (c) Dispersing agents

Suitable dispersants, which also can have wetting properties, in the context of the present invention are dispersants which are usually used for this purpose in solid agrochemical agents, wherein solid dispersants are preferred.

In general, suitable salts in the instant invention, if not otherwise indicated, are selected from the group of alkali metal salts (preferably Li, Na, K), alkaline earth metal salts (preferably Ca, Mg), ammonium or various amines.

Suitable dispersants according to the present invention are dispersants selected from the group of alkylnaphtylsulfonates, lignin sulfonates and salts thereof, and polycarboxylates.

A further preferred group of dispersing aids are alkali metal, alkaline earth metal and ammonium salts of polystyrenesulphonic acids, salts of polyvinylsulphonic acids, salts of alkylnaphthalene sulphonic acids, salts of naphthalene-sulphonic acid-formaldehyde condensation products, salts of condensation products of naphthalenesulphonic acid, phenolsulphonic acid and formaldehyde, and salts of lignosulphonic acid. Mono-and diesters of sulfosuccinate metal salts with branched or linear alcohols comprising 1-10 carbon atoms, in particular for the latter alkali metal salts, more particular sodium salts, and most particular sodium dioctylsulfosuccinate.

Moreover, dispersants according to the present invention are materials selected from the group of lignin sulfonates and salts thereof, preferably selected from the group of lignin sulfonates and salts thereof, for example Borresperse NA, Borresperse 3A, Ultrazine NA, Ufoxane 3A, Vanisperse CB, Marasperse AG, MARASPERSE N 22, MARASPERSE C 21, MARASPERSE CBOS-4, WAFEX CA122 und Borresperse CA der Fa. Borregaard; KRAFTSPERSE EDF-350, KRAFTSPERSE 25M, KRAFTSPERSE EDF-450, REAX 100M, REAX 83A, REAX 85A, REAX 88A, REAX 88B, REAX 907, REAX 910, POLYFON H, POLYFON O und POLYFON T (Ingevity); AGRINOL DN 19 und Agrinol C12 (Fa. Tembec).

Further suitable dispersants in the context of the present invention are dispersants of the poly carboxy late type, for example those such as hydrophobically modified comb-like polymers, for example polyacrylic acid, polymethacrylic acid, polymaleic acid, polymaleic anhydride, a copolymer of maleic acid or maleic anhydride with an olefin (such as isobutylene or diisobutylene), a copolymer of acrylic acid and itaconic acid, a copolymer of methacrylic acid and itaconic acid, a copolymer of maleic acid or maleic anhydride and styrene, a copolymer of acrylic acid and methacrylic acid, a copolymer of acrylic acid and methacrylate, a copolymer of acrylic acid and vinyl acetate, a copolymer of styrene and methacrylic acid, modified copolymers of styrene and methacrylic acid, a copolymer of maleic acid or maleic anhydride and acrylic acid, an N-methyl fatty acid (e.g. C8-C18)-sarcosinate, a carboxylic acid such as a resin acid or a fatty acid (e.g. C8-C18) or a salt of such a carboxylic acid.

Further preferred are dispersants from the group comprising sodium salts of the copolymers of maleic acid and olefins (e.g. Geropon T/36 / Solvay; Duramax D-305 / Dow); and sodium salts of copolymers of methacrylic acid and styrene (Tersperse 2700 / Indorama; Atlox Metasperse 500S / Croda).

Further useful nonionic dispersants include all substances of this type which are typically usable in agrochemical compositions. Preferably made of polyethylene oxide-polypropylene oxide block copolymers, polyethylene glycol ethers of linear alcohols, reaction products of fatty acids with ethylene oxide and/or propylene oxide, and also polyvinyl alcohol, polyvinylpyrrolidone, copolymers of polyvinyl alcohol and polyvinylpyrrolidone, and copolymers of (meth)acrylic acid and (meth)acrylic esters, and additionally alkyl ethoxylates and alkylaryl ethoxylates, which optionally may be phosphated and optionally may be neutralized with bases, mention being made, by way of example, of sorbitol ethoxylates, and, as well, polyoxyalkylenamine derivatives.

Suitable anionic dispersants include all substances of this type that can typically be used in agrochemical compositions.

Dispersing agents (c) that are further preferred in the context of the present invention are dispersants selected from the group of the sodium salts of alkylated naphthalene sulfonates, for example ^{®}Morwet EFW, and the sodium salts of dioctylsulfosuccinic acid, for example ^{®}Aerosol OTB, and more preferably consisting of the sodium salts of alkylated naphthalene sulfonates.

Particularly preferred are dispersing agents from the group of alkylnaphtyl sulfonates, such as e.g. Morwet D-425.

In a preferred embodiment at least two dispersing agents are present, wherein most preferably both are alkylated naphthalene sulfonates.

### d) water-soluble filler

Suitable water-soluble fillers d) for the purposes of the present invention are fillers selected from the group comprising water-soluble inorganic fillers (d1) and water-soluble organic fillers (d2). Preferably, water-soluble inorganic fillers (d1) are selected from the group of soluble inorganic salts,, more preferred potassium sulfate and phosphoric acid salts of the form M₃PO₄, wherein M is preferably an alkali metal cation, more preferably Na or K.

Water-soluble organic fillers are preferably selected from the group of sugars and urea derivatives, for example lactose, maltodextrin and urea.

Even more preferred d1) is selected from the group potassium sulfate, and d2) from lactose and maltodextrin. Most preferred, d2), most preferably d2) is lactose.

DAHP in the context of the instant invention is not considered to be a filler and is excluded.

### (e) Water insoluble filler

Useful inert filler materials (e) are all substances typically usable for this purpose in agrochemical compositions. Preference is given to inorganic particles, such as carbonates, silicates and oxides, and also organic substances, such as urea-formaldehyde condensates and celluloses (e.g. Ulmerweiss 6AL, Celite 209, Argirec B21 and B22, Bentone EW, Luz2 talc, Etiquette Violette). Examples include kaolin, rutile, silicon dioxide, finely divided silica, silica gels, and natural and synthetic silicates, and also talc.

The filler is further preferably selected from the group comprising kaolin, rutile and silicon dioxide. Particular preference is given to kaolin.

### (f) Structure former

The formulations according to the invention may further comprise a structure former. Suitable for this purpose are particularly polyacrylic acid and salts thereof and especially crosslinked polyacrylates, and also polyurethanes and derivatized polyurethanes and salts thereof. Examples of such suitable acrylates are: (poly)methacrylate, (poly)methylinethacrylate, polyacrylamide, (poly)ethoxyethylmethacrylate, and Pergopak^{®}M. Pergopak^{®}M is a polymethylurea resin.

The structure former is more preferably a polymethylurea resin, especially Pergopak^{®}M.

### (g) Adjuvants and formulation aids

Useful foam inhibitors are all substances typically usable for this purpose in agrochemical compositions. Preference is given to silicone oil-based defoamers and magnesium stearate.

Particular preference is given to polydimethylsiloxane absorbed on a solid substrate.

Possible preservatives are all substances which can customarily be employed in agrochemical agents for this purpose. Suitable examples for preservatives are preparations containing 5-chloro-2-methyl-4-isothiazolin-3-one [CAS-No. 26172-55-4], 2-methyl-4-isothiazolin-3-one [CAS-No. 2682-20-4] or 1.2-benzisothiazol-3(2H)-one [CAS-No. 2634-33-5]. Examples which may be mentioned are Preventol^{®} D7 (Lanxess), Kathon^{®} CG/ICP (Dow), Acticide^{®} SPX (Thor GmbH) and Proxel^{®} GXL (Arch Chemicals).

Useful antioxidants are all substances typically usable for this purpose in agrochemical compositions. Preference is given to butylhydroxytoluene.

Useful dyes are all substances typically usable for this purpose in agrochemical compositions. Examples include titanium dioxide, pigment black, zinc oxide and blue pigments, and also Permanent Red FGR. pH-regulating substances are all substances usually used for this purpose in solid agrochemical agents.

Citric acid and ascorbic acid are preferred if an pH value is to be adjusted. Particularly preferred is citric acid.

Ranges of preference stated in the present invention the different levels of preference should be understood such that they can be combined with one another in permutations, but in any case identical levels of preference and especially the most preferred embodiment/level of preference in each case are to be combined with one another and are indeed disclosed as such a combination.

Compositions as described in the instant invention that consist solely of the essential components (not optional components) should likewise be considered to be disclosed.

Percentages - unless stated otherwise - should be regarded as percentages by weight, where the % by weight of the compositions should add up to 100.

Unless defined differently, "basic" in the context of the present invention means a pH in aqueous solution with pH > 7.

The proportion of the active ingredient (component a) in the compositions according to the invention is preferably 1.0 - 30 % by weight,
further preferred 10-30% by weight, and
most preferred 12-30 % by weight.

The proportion of component (b) in the compositions according to the invention as further active ingredient is
preferably 0-15 % by weight,
further preferred 0-15 % by weight, and
most preferred 8-15% by weight.

The proportion of the at least one dispersant (component c) in the compositions according to the invention is
preferably 6-25% by weight,
further preferred 12-25% by weight, and
most preferred 15-23% by weight.

The proportion of the water-soluble filler (component d as sum of d1 and d2) in the compositions according to the invention is
preferably 5-22% by weight,
further preferred 8-22% by weight,
even more preferred 8 - 20 % by weight, and
most preferred 8 - 18 % by weight,

The proportion of the water insoluble filler (component e) in the compositions according to the invention is
preferably 5-50% by weight,
further preferred 10-45% by weight, and
most preferred 30-45% by weight.

The proportion of the structure former (component f) in the compositions according to the invention is
preferably 0.5-15% by weight,
further preferably 1-10% by weight, and
more preferably 3-8% by weight.

The proportion of the further adjuvants (component g) - if present - in the compositions according to the invention is
preferably 0-10% by weight,
further preferably 0.1-8% by weight, and
more preferably 0.2-5% by weight.

A preferred embodiment of the invention is compositions comprising components
a) 1.0 - 30% by weight
b) 0 - 15% by weight
c) 6-25% by weight
d) 5.0-22% by weight
e) 5.0-50% by weight
f) 0.5-15% by weight
g) 0-10% by weight.

A further-preferred embodiment of the invention is compositions comprising components
a) 10-30 % by weight
b) 0-15 % by weight
c) 12-25% by weight
d) 8-22% by weight
e) 10-45% by weight
f) 1-10% by weight
g) 0.1-8% by weight.

An even further-preferred embodiment of the invention is compositions comprising components
a) 12-30% by weight
b) 8-15% by weight
c) 15-23% by weight
d) 8-18% by weight
e) 30-45% by weight
f) 3-8% by weight
g) 0.2-5% by weight.

In a preferred embodiment with a) and b) present as active ingredients the ratio of a) to d) is from 3:1 to 1:3, more preferably from 2:1 to 1:2 and most preferred from 1.8:1 to 1:1.9. In this case d) is preferably d2) only.

In one alternative embodiment only a) is present as active ingredient, no b) is present.

In one preferred embodiment the formulation is free of water-soluble inorganic filler d1).

In one preferred embodiment the proportion of the water-soluble organic filler d2) is from 8-22 % by weight, preferably from 8 - 15 % by weight.

In another preferred embodiment, the formulation is free of water-soluble inorganic filler d1) and the proportion of the water-soluble organic filler d2) is from 8-22 % by weight, preferably from 8 - 15 % by weight.

### Examples:

Preparation of WGs via extrusion as suitable process with low thermal stress:
A mixture of the low-melting active ingredient, and optionally a second active ingredient, and other starting materials (see examples) were, as known in the art, ground in a 4" air jet mill Hosokawa 100 AS (injector air 5.5 bar, grinding air 4.5 bar, throughput 100 g / min), moistened with water (about 11 wt .-%) and extruded on a Fuji Paudal Dome extruder (die size 1 mm) to a WG and post-dried in a fluidized bed dryer until a product temperature of approx. 45°C.

### Flupyradifurone + Spiromesifen

| Example | #1 (comparative example) | #2 | #3 | #4 | #5 | #6 | #7 (comparative example) |
|---|---|---|---|---|---|---|---|
| **component** | **concentration [wt%]** | | | | | | |
| Flupyradifurone | 12 | 12 | 12 | 12 | 12 | 12 | 12 |
| Spiromesifen | 12 | 12 | 12 | 12 | 12 | 12 | 12 |
| Morwet EFW | 2 | 2 | 2 | 2 | 2 | 2 | 2 |
| Morwet D-425 | 15 | 15 | 15 | 15 | 15 | 15 | 15 |
| Citric acid | 0.5 | 0.25 | 0.25 | 0.25 | 0.25 | 0.25 | 0.25 |
| Pergopak M | 5 | 5 | 5 | 5 | 5 | 5 | 5 |
| Lactose | 0 | 5 | 10 | 15 | 22 | 30 | 40 |
| Kaolin | 53.5 | 48.75 | 43.75 | 38.75 | 31.75 | 23.75 | 13.75 |
| Evaluation | - | (-/+) | + | + | + | (-/+) | - |

| | | | | | | | |
|---|---|---|---|---|---|---|---|
| -: Either Extrusion not working properly, or storage stability not given +: Extrusion as well as storage stability good (-/+): Extrusion and Storage still ok, but at least one property is borderline | | | | | | | |

Storage stability for a good positive example: #5

| | 0TW | 8W 54°C | 26W 40°C | 208W RT | 208W -10°C | 208W 30°C |
|---|---|---|---|---|---|---|
| Content Flupyradifurone [wt%] | 12.1 | 11.7 | 12.0 | 12.0 | 12.0 | 12.0 |
| Content Spiromesifen [wt%] | 12.3 | 12.2 | 12.3 | 12.3 | 12.2 | 12.3 |
| pH | 4.8 | 4.8 | 4.7 | 4.9 | 4.8 | 4.8 |
| Wetting Time [s] | 1 | 2 | 1 | 2 | 1 | 2 |
| Suspensibility [wt%] | 95.5 | 95.1 | 95.3 | 95.4 | 95.5 | 95.2 |
| Wet sieve test, residue on 45µm sieve [wt%] | 0.028 | 0.036 | 0 | 0.024 | 0.024 | 0.024 |

### Flupyradifurone + Beta-Cyfluthrin

| Comparative example | | |
|---|---|---|
| | #8 | |
| component | Concentration [wt%] | |
| Beta -Cyfluthrin | 10 | |
| Flupyradifurone | 20 | |
| Pergopak M | 5 | |
| Citric acid | 0.25 | |
| Magnesium stearate | 0.5 | |
| Morwet EFW | 2 | |
| Morwet D 425 | 15 | |
| Lactose | 6 | |
| Potassium sulfate | 10 | |
| Kaolin Tec | 31.25 | |
| Production | bad | |
| Redi Test | intermediate | |
| TK (d90) Malvern (µm) | 16.5 | |

| | Examples according to invention | | | | | | | | | |
|---|---|---|---|---|---|---|---|---|---|---|
| | #9 | #10 | #11 | #12 | #13 | #14 | #15 | #16 | #17 | |
| components | Concentration [wt%] | | | | | | | | | |
| Beta Cyfluthrin | 8 | 8 | 8 | 8 | 10 | 9.3 | 13 | 14 | 15 | |
| Flupyradifurone | 16 | 16 | 16 | 16 | 20 | 18.7 | 13 | 14 | 15 | |
| Pergopak M | 5 | 5 | 5 | 5 | 5 | 5 | 5 | 5 | 5 | |
| Citric acid | 0.25 | 0.25 | 0.25 | 0.25 | 0.25 | 0.25 | 0.25 | 0.25 | 0.25 | |
| Magnesium stearate | 0.5 | 0.5 | 0.5 | 0.5 | 0.5 | 0.5 | 0.5 | 0.5 | 0.5 | |
| Morwet EFW | 2 | 2 | 2 | 2 | 2 | 2 | 2 | 2 | 2 | |
| Morwet D 425 | 15 | 15 | 15 | 15 | 15 | 15 | 15 | 18 | 18 | |
| Lactose | 12 | 10 | 8 | 10 | 8 | 10 | 10 | 10 | 10 | |
| Potassium sulfate | | | | 10 | 10 | 10 | 10 | 10 | 10 | |
| Kaolin Tec | 41.25 | 43.25 | 45.25 | 33.25 | 29.25 | 29.25 | 31.25 | 26.25 | 24.25 | |
| Production | good | good | good | good | good | good | excellent | good | good | |
| Redi Test | good | good | good | good | good | good | good | good | good | |
| TK (d90) Malvern (µm) | 16 | 16 | 15.9 | 14 | 12.14 | 13.9 | 5.3 | 5.3 | 5.5 | |

## Claims

1. Insecticidal solid compositions in the form of water-dispersible granules comprising:
a) a t least one low-melting active ingredient,
b) optional other active ingredients,
c) at least one dispersant,
d) at least one water-soluble filler,
e) optionally a water-insoluble filler,
f) at least one structure former
g) optional other common adjuvants and formulation aids.

2. Insecticidal solid compositions in the form of water-dispersible granules according to claim 1 wherein the composition is free of DAHP (Diammonium hydrogenphosphate).

3. Insecticidal solid compositions in the form of water-dispersible granules according to claims 1 or 2 wherein the low melting active ingredient has a melting point between 30-90 ° C

4. Insecticidal solid compositions in the form of water-dispersible granules according to one or more of the preceding claims, wherein a) is selected from the group consisting of Acetamiprid, Cyfluthrin, beta- Cyfluthrin, Spinosad and Flupyradifurone.

5. Insecticidal solid compositions in the form of water-dispersible granules according to one or more of the preceding claims, wherein a) is selected from Flupyradifurone and Beta-Cyfluthrin

6. Insecticidal solid compositions in the form of water-dispersible granules according to one or more of the preceding claims, wherein components b), e) and g) are mandatory.

7. Insecticidal solid compositions in the form of water-dispersible granules according to one or more of the preceding claims, wherein the dispersing agent is selected from the group of the sodium salts of alkylated naphthalenesulfonates, and the sodium salts of dioctylsulfosuccinic acid.

8. Insecticidal solid compositions in the form of water-dispersible granules according to one or more of the preceding claims, wherein at least two dispersing agents are present.

9. Insecticidal solid compositions in the form of water-dispersible granules according to one or more of the preceding claims, wherein said filler d) is selected from the group comprising water-soluble inorganic fillers and water soluble organic fillers.

10. Insecticidal solid compositions in the form of water-dispersible granules according to one or more of the preceding claims, wherein said filler e) is selected from the group of carbonates, silicates and oxides, urea-formaldehyde condensates and celluloses.

11. Insecticidal solid compositions in the form of water-dispersible granules according to one or more of the preceding claims, wherein the ratio of active a) to filler d) is from 1.8:1 to 1:1.9 if b) is present.

12. Insecticidal solid compositions in the form of water-dispersible granules according to one or more of the preceding claims, wherein b) is spiromesifen.

13. Insecticidal solid compositions in the form of water-dispersible granules according to one or more of the preceding claims, wherein the components are present in
a) 1.0-30 % by weight
b) 0-15 % by weight
c) 6-25 % by weight
d) 5.0-22 % by weight
e) 5.0-50 % by weight
f) 0.5-15 % by weight
g) 0-10 % by weight.

14. Insecticidal solid compositions in the form of water-dispersible granules according to one or more of the preceding claims, wherein the components are present in
a) 12-30 % by weight
b) 8-15 % by weight
c) 15-23 % by weight
d) 8-18 % by weight
e) 30-45 % by weight
f) 3-8 % by weight
g) 0.2-5 % by weight.

15. Insecticidal solid compositions in the form of water-dispersible granules according to one or more of the preceding claims, wherein the proportion of the water-soluble organic filler is from 8-22 % by weight, preferably from 8 - 15 % by weight.

16. Insecticidal solid compositions in the form of water-dispersible granules according to one or more of the preceding claims, wherein the formulation is free of water-soluble inorganic filler and the proportion of the water-soluble organic filler is from 8-22 % by weight, preferably from 8 - 15 % by weight.

17. Process to obtain an insecticidal solid compositions in the form of water-dispersible granules according to one or more of the preceding claims, wherein the composition is produced by extrusion.
